(19) Europäisches Patentamt
European Patent Office
Office européen des brevets

(11) **EP 3 862 470 B1**

(12) **EUROPEAN PATENT SPECIFICATION**

(45) Date of publication and mention
of the grant of the patent:
**27.12.2023 Bulletin 2023/52**

(21) Application number: **19878994.3**

(22) Date of filing: **25.10.2019**

(51) International Patent Classification (IPC):
*D01F 6/50* (2006.01)    *D01F 6/14* (2006.01)
*D01F 1/10* (2006.01)    *B01J 20/28* (2006.01)
*B01J 20/30* (2006.01)    *B01J 20/26* (2006.01)
*B01J 20/18* (2006.01)    *B01J 20/16* (2006.01)
*B01J 20/12* (2006.01)

(52) Cooperative Patent Classification (CPC):
**D01F 1/10; B01J 20/12; B01J 20/165; B01J 20/18;
B01J 20/261; B01J 20/28004; B01J 20/28028;
B01J 20/28057; B01J 20/30; D01F 6/14; D01F 6/50**

(86) International application number:
**PCT/JP2019/041887**

(87) International publication number:
**WO 2020/090649 (07.05.2020 Gazette 2020/19)**

(54) **POLYVINYL ALCOHOL FIBER**

POLYVINYLALKOHOLFASER

FIBRE D'ALCOOL POLYVINYLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2018 JP 2018206843**

(43) Date of publication of application:
**11.08.2021 Bulletin 2021/32**

(73) Proprietor: **Kuraray Co., Ltd.**
**Kurashiki-shi, Okayama 710-0801 (JP)**

(72) Inventors:
• **NONAKA, Yoshimi**
**Kurashiki-shi, Okayama 713-8550 (JP)**
• **WASHITAKE, Yosuke**
**Okayama-shi, Okayama 702-8601 (JP)**
• **SEKIYA, Shinji**
**Kurashiki-shi, Okayama 713-8550 (JP)**
• **ENDO, Ryokei**
**Tokyo 100-8115 (JP)**

(74) Representative: **Müller-Boré & Partner**
**Patentanwälte PartG mbB**
**Friedenheimer Brücke 21**
**80639 München (DE)**

(56) References cited:
JP-A- S4 716 724        JP-A- S6 350 517
JP-A- H01 298 274       JP-A- H09 157 944
JP-A- H09 320 564       JP-A- H09 320 564
JP-A- 2000 256 474      JP-A- 2005 009 029
JP-A- 2005 009 029      JP-A- 2005 194 666
JP-B1- S4 742 059       JP-B1- S4 742 059

• MARK H F ET AL: "Encyclopedia of polymer science and engineering, Vinyl alcohol polymers", 1 January 1989 (1989-01-01), ENCYCLOPEDIA OF POLYMER SCIENCE AND ENGINEERING, JOHN WILEY & SONS, NEW YORK, PAGE(S) 167 - 198, XP002610050, ISBN: 978-0-471-81181-7 * figure 3 *
• ISLAM MD SHAHIDUL ET AL: "Phosphine-functionalized electrospun poly(vinyl alcohol)/silica nanofibers as highly effective adsorbent for removal of aqueous manganese and nickel ions", COLLOIDS AND SURFACES A : PHYSIOCHEMICAL AND ENGINEERINGS ASPECTS, ELSEVIER, AMSTERDAM, NL, vol. 484, 26 July 2015 (2015-07-26), pages 9-18, XP029271949, ISSN: 0927-7757, DOI: 10.1016/J.COLSURFA.2015.07.023

EP 3 862 470 B1

**Description**

The present invention relates to polyvinyl alcohol-based fibers containing an adsorbent.

Adsorbents for adsorbing, and removing, adsorbates contained in treatment liquids has been typically used.

For example, a water purification method has been proposed which uses an inorganic ion adsorbent, such as activated alumina impregnated with aluminum sulfate, as an adsorbent for selectively adsorbing, and removing, phosphorus, boron, arsenic, or other elements contained in river water, sewage treatment water, and industrial wastewater. This inorganic ion adsorbent is supported on an organic polymer resin such as an ethylene vinyl alcohol copolymer. It is described that use of a porous molded body containing the organic polymer resin and the inorganic ion adsorbent increases the speed of treating an adsorbate (see, e.g., Patent Document 1).

PATENT DOCUMENT 1: Japanese Unexamined Patent Publication No. 2006-297382

PATENT DOCUMENT 2: JP S47-42059 B1 describes a method for producing polyvinyl alcohol-based synthetic fiber having excellent adsorption ability.

PATENT DOCUMENT 3: JP H09-320564 A describes a battery separator.

PATENT DOCUMENT 4: JP 2005-009029 A describes a polyvinyl alcohol-based fiber.

However, the molded body described in Patent Document 1 has a part in which the adsorbent is covered with a hydrophobic polymer and results in insufficient adsorption, which poses a problem. When the adsorption is not sufficiently exhibited, there is a need to use an excessive amount of the adsorbent to exhibit required adsorption, which disadvantageously requires high treatment costs and equipment in a larger size. In addition, the molded body described above in Patent Document 1 is substantially in a spherical shape, and has difficulty in being processed into a form according to the application or usage. The use of the molded body is limited to a treatment method using dedicated equipment such as a storage tank or a column, which imposes a burden in terms of costs and space for employing such equipment. On top of that, because of the spherical shape of the molded body, the recovery of the adsorbent is cumbersome and takes time and effort after the treatment, posing a problem in handleability.

The present invention was made in view of the problems described above. It is an object of the present invention to provide polyvinyl alcohol-based fibers with excellent adsorption and handleability.

In order to achieve the object, a polyvinyl alcohol-based fiber according to the present invention contains a polyvinyl alcohol-based polymer and an adsorbent. With respect to 100 parts by mass of the polyvinyl alcohol-based polymer, 30 to 500 parts by mass of the adsorbent is contained. The polyvinyl alcohol-based fiber has a crystallinity of polyvinyl alcohol ranging from 30% to 60%. The polyvinyl alcohol-based fiber has a diameter ranging from 5 $\mu$m to 1000 $\mu$m, and a specific surface area ranging from 10 $m^2$/g to 2000 $m^2$/g.

The present invention provides polyvinyl alcohol-based fibers with excellent adsorption and handleability.

FIG. 1 is a scanning electron microscope (SEM) photograph of polyvinyl alcohol-based fibers prepared in Example 1.

FIG. 2 is an SEM photograph of polyvinyl alcohol-based fibers prepared in Example 5.

The present invention will be described in detail below. Polyvinyl alcohol-based fibers (hereinafter referred to as "PVA-based fibers") according to the present invention contain: a polyvinyl alcohol-based polymer (hereinafter referred to as a "PVA-based polymer"); and an adsorbent.

<PVA-Based Polymer>

The PVA-based polymer forming the PVA-based fibers according to the present invention is not particularly limited as long as containing a vinyl alcohol unit as a main component, or may have other structural units. Examples of such structural units include: olefins such as ethylene, propylene, and butylene; an acrylic acid; its salts; acrylic acid esters such as methyl acrylate; a methacrylic acid; its salts; methacrylic acid esters such as methyl methacrylic; acrylamide; acrylamide derivatives such as N-methyl acrylamide; methacrylamide; methacrylamide derivatives such as N-methylolmethacrylamide; N-vinylamides such as N-vinylpyrrolidone, N-vinylformamide, and N-vinylacetamide; allyl ethers containing polyalkylene oxide in the side chain; vinyl ethers such as methyl vinyl ether; nitriles such as acrylonitrile; vinyl halides such as vinyl chloride; and unsaturated dicarboxylic acids such as a maleic acid, its salts or its anhydrides, and its esters. Such modification units may be introduced by copolymerization or post-reaction.

The saponification rate of the PVA-based polymer according to the present invention is 98 mol% or more, and preferably 99 mol% or more in view of the crystallinity and orientation of the obtained fibers. Further, the saponification rate of 99.7 mol% or more is particularly preferable because the obtained fibers have high heat and water resistances.

The average polymerization degree of the PVA-based polymer according to the present invention is from 1500 to 20000. Generally, the average polymerization degree obtained from the viscosity of the aqueous solution at 30°C preferably ranges from 1200 to 20000 in view of mechanical characteristics, dimensional stability, or other characteristics of the obtained fibers. A polymer with a high polymerization degree is preferred in view of the strength, moisture and heat resistances, and other characteristics. In view of the costs for manufacturing the polymer and forming the fibers, however, the average polymerization degree may range from 1500 to 5000 in a particularly preferred embodiment.

The "average polymerization degree" here can be obtained from the viscosity of an aqueous solution at 30°C under the provisions of JIS K-6726 (1994).

The concentration of the PVA-based polymer in the entire PVA-based fibers preferably ranges from 20% by mass to 77% by mass. This is because the PVA-based polymer at a concentration lower than the range may have difficulty in forming the PVA-based fibers, whereas the PVA-based polymer at a concentration higher than the range may insufficiently exhibit the adsorption performance if the PVA-based fibers are used as an adsorbent.

The lower limit of the concentration of the PVA-based polymer in the entire PVA-based fibers is more preferably 25% by mass or more. The upper limit of the concentration of the PVA-based polymer in the entire PVA-based fibers is more preferably 50% by mass or less.

<Adsorbent>

The adsorbent according to the present invention is not particularly limited as long as not impairing the advantages of the present invention. An adsorbent is used which adsorbs harmful contaminants, odorous substances, organic halogen compounds, and other unnecessary organic substances. The harmful contaminants (e.g., heavy metals) are contained in target objects such as soil, river water, industrial wastewater, and civil engineering water. Examples of the odorous substances include malodorous components discharged from research facilities, factories, and treatment facilities, generated from body fluids, and generated from chemicals. Examples of the other unnecessary organic substances include impurity and turbid components in foods and beverages, colored substances, and hardly decomposable organic substances discharged in food processing and fiber processing steps.

Examples of the adsorbent include carbon-, zeolite-, silicate-, and metal compound-based adsorbents. Examples of the carbon-based adsorbents include porous carbon materials, such as activated carbon, for removing odorous substances, organic halogen compounds, residual chlorine, other toxic substances, and harmful substances. Examples of the zeolite-based adsorbents include artificial and natural zeolites for removing ammonia, organic amines, and metal ions such as cesium, boron, potassium, magnesium, and calcium. Examples of the silicate-based adsorbents include layered silicates such as bentonite, and aluminosilicate. Examples of the metal compound-based adsorbents include iron-, magnesium-, calcium-, and aluminum-based metal oxides and metal hydroxides for removing heavy metals such as lead, phosphorus, arsenic, and cadmium.

In the present invention, these adsorbents can be used alone or in combination.

The PVA-based fibers according to the present invention contain 30 to 500 parts by mass of the adsorbent with respect to 100 parts by mass of the PVA-based polymer. This is because an adsorbent content lower than the range causes higher coverage of the adsorbent with the PVA-based polymer and thus decreases the permeability of the treatment liquid. As a result, the obtained fibers may insufficiently exhibit the adsorption of an adsorbate contained in the treatment liquid. On the other hand, an adsorbent content exceeding the range makes the shaping (i.e., formation) of the PVA-based fibers difficult and causes a large amount of the adsorbent to fall off the PVA-based fibers and to be mixed into the treatment liquid, which may deteriorate the handleability.

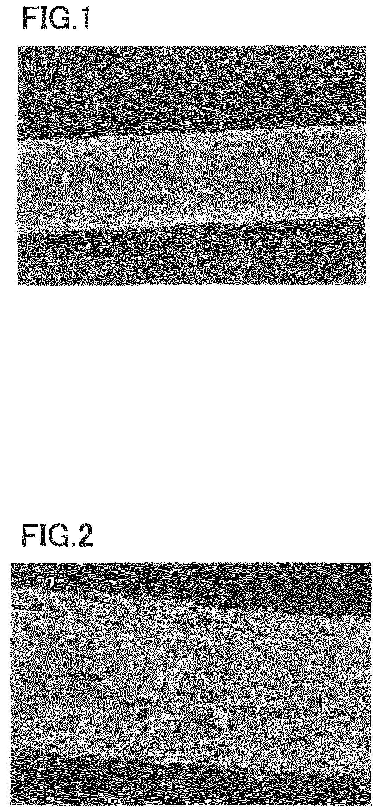

That is, with the adsorbent content set to 30 to 500 parts by mass with respect to 100 parts by mass of the PVA-based polymer, the PVA-based fibers with excellent adsorption can be obtained with fine pores for adsorbing an adsorbate without causing the disadvantages of the adsorbent falling off the fibers and being mixed into the treatment liquid (see FIGS. 1 and 2 in Examples described later).

The lower limit of the adsorbent content is preferably 100 parts by mass or more with respect to 100 parts by mass of the PVA-based polymer. The upper limit of the adsorbent content is preferably 300 parts by mass or less with respect to 100 parts by mass of the PVA-based polymer.

The average particle size of the adsorbent is not particularly limited, but preferably ranges from 0.1 $\mu$m to 100 $\mu$m. This is because a size smaller than the range makes it difficult to form fine pores in the fibers and thus decreases the permeability of the treatment liquid into the fibers, which may decrease the adsorption of the adsorbent. On the other hand, a size exceeding the range makes the shaping (i.e., formation) of the PVA-based fibers difficult and causes a large amount of the adsorbent to fall off the PVA-based fibers and to be mixed into the treatment liquid, which may deteriorate the handleability.

The lower limit of the average particle size of the adsorbent is more preferably 0.5 $\mu$m or more. The upper limit of the average particle size of the adsorbent is more preferably 30 $\mu$m or less, and still more preferably 10 $\mu$m or less.

The "average particle size" here refers to a 50% particle size (D50) which can be measured using a particle size distribution measurement apparatus (Nanotrac (registered trademark) particle size distribution measurement apparatus UPA-EX150 manufactured by Nikkiso Co., Ltd.), for example, employing laser Doppler flowmetry.

<PVA-Based Fibers>

The PVA-based fibers according to the present invention have pores inside, and thus allow an adsorbate to permeate rapidly thereinto and contact the adsorbate in a large area, thereby exhibiting a higher adsorption effect. The PVA-based fibers according to the present invention have a crystallinity of PVA of 30% to 60%. The PVA-based fibers with a crystallinity in this range have appropriate hydrophilia, and thus have lower resistance to the diffusion of the treatment liquid in the PVA without impairing the performance of the adsorbent even if covered with PVA. In addition, such fibers have appropriate strength and can be processed into various forms, such as cotton, non-woven fabric, woven fabric, or paper, in accordance with the application. On the other hand, the PVA-based fibers with a crystallinity of PVA lower than the range cause elution of PVA or fall-off of the adsorbent in the treatment and significantly increase the turbidity of the treatment liquid, which results in poor handleability. On the other hand, the PVA-based fibers with a crystallinity of PVA exceeding the range have inappropriate hydrophilia, poor permeability of the treatment liquid, and poor adsorption performance.

That is, with the crystallinity of PVA set to 30% to 60%, the PVA-based fibers exhibit improved processability into forms and handleability without impairing the adsorption performance.

The lower limit of the crystallinity of the PVA-based fibers is preferably 40% or more. The upper limit of the crystallinity of the PVA-based fibers is preferably 55% or less, and more preferably 50% or less. The crystallinity can be obtained by the method described later.

The PVA-based fibers according to the present invention have a diameter ranging from 5 $\mu$m to 1000 $\mu$m. This is because the PVA-based fibers with a diameter less than the range may have insufficient strength in processing and handling, whereas the PVA-based fibers exceeding the range may have poor flexibility and difficulty in the processing.

The lower limit of the diameter of the PVA-based fibers is preferably 10 $\mu$m or more, and more preferably 20 $\mu$m or more. The upper limit of the diameter of the PVA-based fibers is preferably 500 $\mu$m or less, and more preferably 100 $\mu$m or less.

The PVA-based fibers according to the present invention have a specific surface area ranging from 10 $m^2$/g to 2000 $m^2$/g. This is because the PVA-based fibers with a specific surface area smaller than the range have too few pores, and thus have a lower permeability of the treatment liquid and a significantly lower adsorption rate. On the other hand, the PVA-based fibers with a specific surface area exceeding the range have too many pores, and may thus have lower processability and cause fall-off of the adsorbent.

The lower limit of the specific surface area of the PVA-based fibers is preferably 20 $m^2$/g or more, and more preferably 40 $m^2$/g or more. The upper limit of the specific surface area of the PVA-based fibers is preferably 1000 $m^2$/g or less, and more preferably 500 $m^2$/g or less. The specific surface area can be obtained by the method described later.

That is, with the diameter set to 5 $\mu$m to 1000 $\mu$m and a specific surface area set to 10 $m^2$/g to 2000 $m^2$/g, the PVA-based fibers with excellent adsorption and handleability can be obtained.

The PVA-based fibers according to the present invention preferably have a swelling degree ranging from 150% to 600%. This is because a swelling degree lower than the range decreases the permeability of the treatment liquid, and may thus decrease the adsorption. On the other hand, a swelling degree exceeding the range allows the fibers themselves to absorb a large amount of the treatment liquid. Accordingly, a size change of the fibers due to the swelling makes the recovery or replacement of the fibers difficult after the adsorption treatment, and causes the elution of the PVA-based resin or the fall-out of the adsorbent from the PVA-based fibers. Accordingly, the handleability deteriorates. In addition, the gaps become smaller through which the treatment liquid passes, which decreases the liquid permeability.

That is, the swelling degree set to 150% to 600% of the PVA-based fibers with excellent adsorption can be reliably obtained without deteriorating the handleability and liquid permeability.

The lower limit of the swelling degree of the PVA-based fibers is more preferably 200% or more. The upper limit of the swelling degree of the PVA-based fibers is more preferably 500% or less, and still more preferably 400% or less.

The "swelling degree of fibers" here refers to the degree of swelling of fibers calculated using Expression (1) presented later.

In the PVA-based fibers according to the present invention, the effective utilization rate of the adsorbent preferably ranges from 50% to 100%. This is because an effective utilization rate lower than the range decreases the adsorption, which may require a large number of fibers for the treatment.

That is, with the effective utilization rate set to 50% to 100%, the PVA-based fibers with excellent adsorption can be reliably obtained without deteriorating the handleability.

The lower limit of the effective utilization rate of the PVA-based fibers is more preferably 60% or more, and still more preferably 70% or more.

The "effective utilization rate" here refers to the rate of utilizing the adsorbent, which is calculated using Expression (3) presented later.

As described above, since the PVA-based fibers according to the present invention contain, as a resin component, the PVA-based polymer with excellent affinity with an adsorbent and high hydrophilicity, and uniformly contain the adsorbent in fine particles at a high concentration. Accordingly, the PVA-based fibers with excellent handleability and adsorption can be obtained.

The PVA-based fibers according to the present invention are produced from a spinning dope containing a PVA-based polymer and an adsorbent by solution spinning, specifically by any one of wet spinning, dry jet wet spinning, and dry spinning. In the spinning dope, any solvent typically used in producing the PVA-based fibers may be used. For example, dimethyl sulfoxide (DMSO), dimethylformamide, dimethylacetamide, methanol, water, polyhydric alcohols such as glycerin, ethylene glycol and triethylene glycol, diethylenetriamine, and rhodanate can be used alone or in combination.

Among these, DMSO or water is particularly advantageous in view of suppliability and influence as an environmental load. The polymer concentration in the spinning dope varies depending on the composition and polymerization degree of the PVA-based polymer and the solvent, but generally falls within the range of 6% by mass to 60% by mass.

As long as not impairing the advantages of the present invention, the spinning dope may contain, in addition to the PVA-based polymer and the adsorbent, additives such as an antioxidant, an anti-freezing agent, a pH adjuster, a masking agent, a coloring agent, and an oil agent in accordance with the purpose.

The PVA-based fibers according to the present invention can be used in any fiber form such as staple fibers, short cut fibers, filament yarn, or spun yarn. The cross-sectional shape of the fibers is also not particularly limited, and may be a circular shape, a hollow shape, or an irregular shape such as a star.

The fibers according to the present invention may be mixed or used together with other fibers. In this case, the fibers that can be mixed and used together are not particularly limited. Examples of the fibers include PVA-based fibers containing no adsorbent, polyester-based fibers, polyamide-based fibers, and cellulose-based fibers. The fibers may also be used as a fiber structure such as crimped cotton, woven fabric, non-woven fabric, knitted fabric, or paper.

The fiber structure according to the present invention is advantageous in any of food and beverage, clothing, medical, agricultural, water treatment, and other applications. The fiber structure can be used in liquid or gas including vapor. In one more preferred embodiment, the fiber structure is used in an aqueous solution, for example, as an adsorbent that adsorbs an adsorbate contained in the treatment liquid, or any of various types of filters made of a fiber structure such as a filament, short-cut fibers, crimped cotton, woven fabrics, knitted fabrics, or paper. Examples of the adsorbent include adsorption filters for removing heavy metals, such as cadmium, lead, arsenic, and fluorine, contained in soil and river water, adsorption filters for adsorbing impurity and turbidity components in foods and beverages, adsorption filters for adsorbing colored substances, and adsorption filters for adsorbing odor components.

The PVA-based fibers according to the present invention can be used in, for example, a case where short-cut fibers are put into a treatment liquid tank so as to be treated, a case where crimped cotton is molded into fiber rods to pass through a treatment liquid so as to be treated, a case where the fibers are formed into a filament as a wound cartridge to pass through a treatment liquid so as to be treated, and a case where the fibers in the form of tubular or sheet-like woven or non-woven fabric passes through a treatment liquid so as to be treated.

Examples

The present invention will be described below based on examples. Note that the present invention shall not be limited to these examples. These examples may be modified and changed based on the intent according to the present invention. Such changes and modifications shall not be excluded from the scope of the invention.

(Example 1)

<Preparation of PVA-Based Fibers>

Hundred parts by mass of PVA with an average polymerization degree of 2400 and a saponification degree of 98.0 mol% (trade name: PVA-124 manufactured by KURARAY CO., LTD.) and 150 parts by mass of bentonite (trade name: Kunipia F manufactured by KUNIMINE INDUSTRIES CO., LTD. with an average particle size of 1 $\mu$m) were dispersed into 580 parts by mass of DMSO. The PVA was heated and dissolved under a nitrogen atmosphere at 105°C to prepare a spinning dope.

Next, the obtained spinning dope was, through a nozzle with 40 holes in a size of 0.15 mm, subjected to dry jet wet spinning in a coagulation bath containing methanol and DMSO (at a mass ratio of 70/30) at 5°C. After that, the obtained solidified yarn was wet-stretched to three times its initial length in a methanol bath at 20°C, dried with hot air at 120°C, and subjected to dry heat stretching in a hot air oven at 230°C to five times its initial length in total. Accordingly, fibers with a diameter of 30 $\mu$m were obtained.

The obtained fibers were crimped, cut, and carded into a sheet (i.e., a web), and then subjected to needle punching. With excellent processability, soft non-woven fabric was obtained.

The prepared fibers were observed using a scanning electron microscope (SEM). An SEM photograph of the prepared fibers is shown in FIG. 1. As shown in FIG. 1, it is found that a large number of micropores are formed on the surface of the prepared fibers.

<Evaluation on Spinnability>

The spinnability was evaluated in accordance with the following evaluation criteria. The results are shown in Table 1.

Continuous fibers were collectable in the dry jet wet spinning: Good
No continuous fibers were collectable in the dry jet wet spinning: Poor

<Measurement of Crystallinity>

[Crystallinity (Xc)%]

The crystallinity of PVA in the fibers was measured as the melting enthalpy of the fibers using a differential scanning calorimeter Pyris-1 manufactured by PerkinElmer Co., Ltd. The measurement was performed under the condition at a heating rate of 80 °C/min, and the weight fraction of the crystallinity was calculated from the following Expressions. The melting point and heat of fusion were corrected using indium and lead as standard substances. The results are shown in Table 1.

$$Xc\ (\%) = \Delta Hp/\Delta Hcal \times 100$$

ΔHp: Heat of Fusion (J/g) of PVA in Fibers
ΔHobs: Measured Heat of Fusion (J/g) of Fibers
ΔHp = Δ Hobs/(mass of PVA/mass of PVA-based fibers)
ΔHcal: Heat of Fusion of Perfect Crystal (174.5 J/g)

<Evaluation on Specific Surface Area of Fibers (by BET)>

The specific surface area of the fibers was evaluated using a specific surface area measurement apparatus (Monosorb manufactured by Quantachrome) by dynamic flow, single-point BET. In pre-treatment using the apparatus, the gas was removed at a room temperature for 30 minutes under an $N_2$ gas atmosphere. In the measurement, mixture gas, which contains $N_2$ at 30% and He at 70%, flowed through a U-shaped cell containing a sample. A sample chamber was cooled to a liquid nitrogen temperature (77 K) so that the sample adsorbs only $N_2$ gas on its surface. The results are shown in Table 1.

<Measurement of Swelling Degree>

The prepared fibers (about 1 g) were dried in a vacuum drier at 80°C for 24 hours, and the bone dry fiber weight was measured. Next, these fibers were immersed into ion-exchange water at 20°C for 60 minutes. The fibers were then taken out by filtration, water droplets adhering to the surface were lightly removed using filter paper, and then the fiber weight after the immersion was measured. After that, the swelling degree of the prepared fibers was calculated using the following Expression (1). The results are shown in Table 1.
[Math 1]

$$\text{Swelling Degree (\%) of Fibers} = (\text{Fiber Weight after Immersion/Bone Dry Fiber Weight}) \times 100 \tag{1}$$

<Evaluation on Adsorption>

As an index of adsorption, the performance of removing (i.e., the rate of adsorbing) methylene blue that is a water-soluble compound was evaluated. More specifically, the fibers were added to account for 1 % by mass with respect to 500 mL of an aqueous solution containing 100 ppm of methylene blue. The mixture was stirred at 30°C for 60 minutes. The solution after the treatment was then collected. Using a spectrophotometer (trade name: U-2001 Spectrophotometer manufactured by HITACHI), the maximum absorption wavelength at 664 nm was measured to calculate the concentration of methylene blue after the treatment. Then, the adsorption rate of the prepared fibers was calculated using the following Expression (2). The results are shown in Table 1.

[Math 2]

$$\text{Methylene Blue Adsorption Rate (\%)} = (\text{Methylene Blue Concentration in Untreated}$$
$$\text{Liquid} - \text{Methylene Blue Concentration after Treatment)} / (\text{Methylene Blue Concentration in}$$
$$\text{Untreated Liquid}) \times 100 \qquad (2)$$

<Measurement of Turbidity>

The supernates of the treatment liquid immediately after the adsorption evaluation described above were collected to measure the turbidity (mg/L) using a turbidimeter (portable turbidimeter 2100P manufactured by HACH). The results are shown in Table 1. It can be said that higher turbidity makes the recovery of the treatment liquid more difficult, resulting in poor handleability.

<Measurement of Effective Utilization Rate>

After the adsorption rate of the fibers was measured by the method described above, the adsorption rate of only the adsorbent was measured by the same method using the same amount of the adsorbent as that in the fibers. Then, the effective utilization rate of the adsorbent in the fibers was calculated using the following Expression (3).

[Math 3]

$$\text{Effective Utilization Rate (\%)} = (\text{Adsorption Rate of Fibers}) / (\text{Adsorption Rate of}$$
$$\text{Adsorbent}) \times 100 \qquad (3)$$

(Example 2)

<Preparation of PVA-Based Fibers>

Hundred parts by mass of PVA with an average polymerization degree of 2400 and a saponification degree of 98.0 mol% (trade name: PVA-124 manufactured by KURARAY CO., LTD.) and 300 parts by mass of bentonite (trade name: Kunipia F manufactured by KUNIMINE INDUSTRIES CO., LTD. with an average particle size of 1 $\mu$m) were dispersed into 930 parts by mass of DMSO. The PVA was heated and dissolved under a nitrogen atmosphere at 105°C to prepare a spinning dope.

Next, the obtained spinning dope was, through a nozzle with 40 holes in a size of 0.15 mm, subjected to dry jet wet spinning in a coagulation bath containing methanol and DMSO (at a mass ratio of 70/30) at 5°C. After that, the obtained solidified yarn was wet-stretched to 2.5 times its initial length in a methanol bath at 20°C, dried with hot air at 120°C, and subjected to dry heat stretching in a hot air oven at 230°C to four times its initial length in total. Accordingly, fibers with a diameter of 50 $\mu$m were obtained.

The obtained fibers were crimped, cut, and carded into a sheet (i.e., a web), and then subjected to needle punching. With excellent processability, soft non-woven fabric was obtained.

In the same manner as in Example 1 described above, the evaluation on the spinnability, the measurement of the crystallinity, the evaluation on the specific surface area of the fibers, the measurement of the swelling degree, the evaluation on the adsorption, the measurement of the turbidity, and the measurement of the effective utilization rate were performed. The results are shown in Table 1.

(Example 3)

<Preparation of PVA-Based Fibers>

Hundred parts by mass of PVA with an average polymerization degree of 2400 and a saponification degree of 98.0 mol% (trade name: PVA-124 manufactured by KURARAY CO., LTD.) and 150 parts by mass of bentonite (trade name: Kunipia F manufactured by KUNIMINE INDUSTRIES CO., LTD. with an average particle size of 1 $\mu$m) were dispersed into 580 parts by mass of DMSO. The PVA was heated and dissolved under a nitrogen atmosphere at 105°C to prepare a spinning dope.

Next, the obtained spinning dope was, through a nozzle with one hole in a size of 2.0 mm, subjected to dry jet wet spinning in a coagulation bath containing methanol and DMSO (at a mass ratio of 70/30) at 5°C. After that, the obtained solidified yarn was wet-stretched to three times its initial length in a methanol bath at 20°C, dried with hot air at 120°C, and subjected to dry heat stretching in a hot air oven at 230°C to five times its initial length in total. Accordingly, fibers with a diameter of 400 $\mu$m were obtained.

The obtained fibers were crimped, cut, and carded into a sheet (i.e., a web), and then subjected to needle punching. With excellent processability, soft non-woven fabric was obtained.

In the same manner as in Example 1 described above, the evaluation on the spinnability, the measurement of the crystallinity, the evaluation on the specific surface area of the fibers, the measurement of the swelling degree, the evaluation on the adsorption, the measurement of the turbidity, and the measurement of the effective utilization rate were performed. The results are shown in Table 1.

(Example 4)

<Preparation of PVA-Based Fibers>

Hundred parts by mass of PVA with an average polymerization degree of 2400 and a saponification degree of 98.0 mol% (trade name: PVA-124 manufactured by KURARAY CO., LTD.) and 150 parts by mass of zeolite (product name: SP # 600 manufactured by NITTO FUNKA KOGYO K.K. with an average particle size of 2 $\mu$m) were dispersed into 580 parts by mass of DMSO. The PVA was heated and dissolved under a nitrogen atmosphere at 105°C to prepare a spinning dope.

Next, the obtained spinning dope was, through a nozzle with 40 holes in a size of 0.15 mm, subjected to dry jet wet spinning in a coagulation bath containing methanol and DMSO (at a mass ratio of 70/30) at 5°C.

After that, the obtained solidified yarn was wet-stretched to three times its initial length in a methanol bath at 20°C, dried with hot air at 120°C, and subjected to dry heat stretching in a hot air oven at 230°C to five times its initial length in total. Accordingly, fibers with a diameter of 80 $\mu$m were obtained.

The obtained fibers were crimped, cut, and carded into a sheet (i.e., a web), and then subjected to needle punching. With excellent processability, soft non-woven fabric was obtained.

<Evaluation on Adsorption>

As an index of adsorption, the performance of removing (i.e., the rate of adsorbing) calcium ions that are cations was evaluated. More specifically, the fibers were added to account for 2% by mass with respect to 500 mL of a standard solution containing 1 ppm of calcium ions. The mixture was stirred at 30°C for 60 minutes. Then, the solution after the treatment was collected to measure the calcium ion concentration after the treatment using an ICP emission spectrometer (OPTIMA 4300DV manufactured by PerkinElmer). Then, the adsorption rate of the prepared fibers was calculated using the following Expression (4). The results are shown in Table 1.

[Math 4]

$$\text{Calcium Ion Adsorption Rate (\%)} = (\text{Calcium Ion Concentration in Untreated Liquid}$$
$$- \text{Calcium Ion Concentration after Treatment}) / (\text{Calcium Ion Concentration in Untreated}$$
$$\text{Liquid}) \times 100 \qquad (4)$$

In the same manner as in Example 1 described above, the evaluation on the spinnability, the measurement of the crystallinity, the evaluation on the specific surface area of the fibers, the measurement of the swelling degree, the measurement of the turbidity, and the measurement of the effective utilization rate were performed. The results are shown in Table 1.

(Example 5)

<Preparation of PVA-Based Fibers>

Hundred parts by mass of PVA with an average polymerization degree of 2400 and a saponification degree of 98.0 mol% (trade name: PVA-124 manufactured by KURARAY CO., LTD.) and 150 parts by mass of activated carbon (trade name: KURARAY COAL YP-50F manufactured by KURARAY CO., LTD. with an average particle size of 6 $\mu$m) were dispersed into 580 parts by mass of DMSO. The PVA was heated and dissolved under a nitrogen atmosphere at 105°C to prepare a spinning dope.

Next, the obtained spinning dope was, through a nozzle with 40 holes in a size of 0.15 mm, subjected to dry jet wet spinning in a coagulation bath containing methanol and DMSO (at a mass ratio of 70/30) at 5°C.

After that, the obtained solidified yarn was wet-stretched to three times its initial length in a methanol bath at 20°C, dried with hot air at 120°C, and subjected to dry heat stretching in a hot air oven at 230°C to five times its initial length in total. Accordingly, fibers with a diameter of 80 $\mu$m were obtained.

The obtained fibers were crimped, cut, and carded into a sheet (i.e., a web), and then subjected to needle punching. With excellent processability, soft non-woven fabric was obtained.

The prepared fibers were observed using an SEM. An SEM photograph of the prepared fibers is shown in FIG. 2. As shown in FIG. 2, it is found that a large number of micropores are formed on the surface of the prepared fibers.

<Evaluation on Adsorption>

As an index of adsorption, the performance of removing (i.e., the rate of adsorbing) methylene blue that is a water-soluble compound was evaluated. More specifically, the fibers were added to account for 0.25% by mass with respect to 500 mL of an aqueous solution containing 600 ppm of methylene blue. The mixture was stirred at 30°C for 60 minutes. The solution after the treatment was then collected. Using a spectrophotometer (trade name: U-2001 Spectrophotometer manufactured by HITACHI), the maximum absorption wavelength at 664 nm was measured to calculate the concentration of methylene blue after the treatment. Then, the adsorption rate of the prepared fibers was calculated using the above Expression (2). The results are shown in Table 1.

In the same manner as in Example 1 described above, the evaluation on the spinnability, the measurement of the crystallinity, the evaluation on the specific surface area of the fibers, the measurement of the swelling degree, the measurement of the turbidity, and the measurement of the effective utilization rate were performed. The results are shown in Table 1.

(Example 6)

<Preparation of PVA-Based Fibers>

Hundred parts by mass of PVA with an average polymerization degree of 2400 and a saponification degree of 98.0 mol% (trade name: PVA-124 manufactured by KURARAY CO., LTD.) and 50 parts by mass of bentonite (trade name: Kunipia F manufactured by KUNIMINE INDUSTRIES CO., LTD. with an average particle size of 1 $\mu$m) were dispersed into 350 parts by mass of DMSO. The PVA was heated and dissolved under a nitrogen atmosphere at 105°C to prepare a spinning dope.

Next, the obtained spinning dope was, through a nozzle with 40 holes in a size of 0.15 mm, subjected to dry jet wet spinning in a coagulation bath containing methanol and DMSO (at a mass ratio of 70/30) at 5°C. After that, the obtained solidified yarn was wet-stretched to three times its initial length in a methanol bath at 20°C, dried with hot air at 120°C, and subjected to dry heat stretching in a hot air oven at 230°C to seven times its initial length in total. Accordingly, fibers with a diameter of 30 $\mu$m were obtained.

The obtained fibers were crimped, cut, and carded into a sheet (i.e., a web), and then subjected to needle punching. With excellent processability, soft non-woven fabric was obtained.

In the same manner as in Example 1 described above, the evaluation on the spinnability, the measurement of the crystallinity, the evaluation on the specific surface area of the fibers, the measurement of the swelling degree, the evaluation on the adsorption, the measurement of the turbidity, and the measurement of the effective utilization rate were performed. The results are shown in Table 1.

(Comparative Example 1)

In preparing PVA-based fibers, the amount of added bentonite was changed to 20 parts by mass, and the stretching magnification was changed to ten times. In other respects, the PVA-based fibers were prepared in the same manner as in Example 1 described above.

In the same manner as in Example 1 described above, the evaluation on the spinnability, the measurement of the crystallinity, the evaluation on the specific surface area of the fibers, the measurement of the swelling degree, the evaluation on the adsorption, the measurement of the turbidity, and the measurement of the effective utilization rate were performed. The results are shown in Table 1.

(Comparative Example 2)

In preparing PVA-based fibers, the amount of added bentonite was changed to 550 parts by mass. In other respects, the dry wet jet spinning was performed in the same manner as in Example 1 described above.

In this comparative example, since the bentonite content was greater than 500 parts by mass. Accordingly, yarn breakage frequently occurred during the spinning step, and shaping (i.e., formation) of the fibers was difficult. As shown in Table 1, the measurement of the crystallinity, the evaluation on the specific surface area of the fibers, the measurement of the swelling degree, the evaluation on the adsorption, the measurement of the turbidity, and the measurement of the effective utilization rate were impossible.

(Comparative Example 3)

Hundred parts by mass of PVA with an average polymerization degree of 1700 and a saponification degree of 98.0 mol% (trade name: PVA-117 manufactured by KURARAY CO., LTD.) and 300 parts by mass of bentonite (trade name: Kunipia F manufactured by KUNIMINE INDUSTRIES CO., LTD. with an average particle size of 1 $\mu$m) were dispersed into 930 parts by mass of DMSO. The PVA was heated and dissolved under a nitrogen atmosphere at 105°C to prepare a spinning dope.

Next, the obtained spinning dope was, through a nozzle with 40 holes in a size of 0.15 mm, subjected to dry jet wet spinning in a coagulation bath containing methanol and DMSO (at a mass ratio of 70/30) at 5°C. After that, the obtained solidified yarn was wet-stretched to 2.5 times its initial length in a methanol bath at 20°C, dried with hot air at 120°C. Accordingly, fibers with a diameter of 65 $\mu$m were obtained.

In the same manner as in Example 1 described above, the evaluation on the spinnability, the measurement of the crystallinity, the evaluation on the specific surface area of the fibers, the measurement of the swelling degree, the evaluation on the adsorption, the measurement of the turbidity, and the measurement of the effective utilization rate were performed. The results are shown in Table 1.

(Comparative Example 4)

In the same manner as in Example 1 described above, the evaluation on the specific surface area of 100 parts by mass of bentonite (in powder), the evaluation on the adsorption, the measurement of the turbidity, and the measurement of the effective utilization rate were performed. The results are shown in Table 1.

(Comparative Example 5)

<Preparation of PVA-Based Fibers>

Hundred parts by mass of PVA with an average polymerization degree of 2400 and a saponification degree of 98.0 mol% (trade name: PVA-124 manufactured by KURARAY CO., LTD.) and 150 parts by mass of bentonite (trade name: Kunipia F manufactured by KUNIMINE INDUSTRIES CO., LTD. with an average particle size of 1 $\mu$m) were dispersed into 930 parts by mass of DMSO. The PVA was heated and dissolved under a nitrogen atmosphere at 105°C to prepare a spinning dope.

Next, the obtained spinning dope was, through a nozzle with one hole in a size of 5.0 mm, subjected to dry jet wet spinning in a coagulation bath containing methanol and DMSO (at a mass ratio of 70/30) at 5°C. After that, the obtained solidified yarn was wet-stretched to 1.1 times its initial length in a methanol bath at 20°C, dried with hot air at 120°C, and subjected to dry heat stretching in a hot air oven at 230°C to 1.2 times its initial length in total. Accordingly, fibers with a diameter of 1100 $\mu$m were obtained.

Subjected to crimping treatment, the obtained fibers were frequently broken during the treatment and poor in the processability. As a result, no non-woven fabric was obtained.

In the same manner as in Example 1 described above, the evaluation on the spinnability, the measurement of the crystallinity, the evaluation on the specific surface area of the fibers, the measurement of the swelling degree, the evaluation on the adsorption, the measurement of the turbidity, and the measurement of the effective utilization rate were performed. The results are shown in Table 1.

(Comparative Example 6)

A spinning dope was prepared in the same manner as in Comparative Example 5 described above. In order to prepare fibers with a diameter of 3 $\mu$m, the obtained spinning dope was, through a nozzle with 40 holes in a size of 0.15 mm, subjected to dry jet wet spinning in a coagulation bath containing methanol and DMSO (at a mass ratio of 70/30) at 5°C. However, since the fiber diameter was smaller than 5 $\mu$m, the strength of the solidified yarn was extremely weak and poor in the processability, and thus unable to be wound.

[Table 1]

| | PVA | Adsorbent | | | Spinnability | Crystallinity (%) | Fiber Diameter (μm) | Specific Surface Area (m²/g) | Swelling Degree (%) | Adsorption | | Handleability | | |
|---|---|---|---|---|---|---|---|---|---|---|---|---|---|---|
| | Parts by Mass | Type | Parts by Mass | Average Particle Size (μm) | | | | | | Adsorbate | Adsorption Rate (%) | Effective Utilization Rate (%) | Turbidity | Availability of Non-Woven Fabric |
| Example 1 | 100 | Bentonite | 150 | 1 | Good | 45 | 30 | 40 | 351 | Methylene Blue | 96 | 89 | 2 | Yes |
| Example 2 | 100 | Bentonite | 300 | 1 | Good | 40 | 50 | 50 | 420 | Methylene Blue | 98 | 99 | 2 | Yes |
| Example 3 | 100 | Bentonite | 150 | 1 | Good | 43 | 400 | 32 | 365 | Methylene Blue | 93 | 87 | 5 | Yes |
| Example 4 | 100 | Zeolite | 150 | 2 | Good | 44 | 80 | 50 | 220 | Calcium Ions | 80 | 89 | 2 | Yes |
| Example 5 | 100 | Activated Carbon | 150 | 6 | Good | 44 | 80 | 636 | 210 | Methylene Blue | 93 | 93 | 2 | Yes |
| Example 6 | 100 | Bentonite | 50 | 1 | Good | 51 | 30 | 29 | 305 | Methylene Blue | 76 | 70 | 2 | Yes |
| Comparative Example 1 | 100 | Bentonite | 20 | 1 | Good | 62 | 22 | 15 | 233 | Methylene Blue | 68 | 48 | 1 | Yes |
| Comparative Example 2 | 100 | Bentonite | 550 | 1 | Poor | - | - | - | - | - | - | - | - | No |
| Comparative Example 3 | 100 | Bentonite | 300 | 1 | Good | 29 | 65 | 40 | 630 | Methylene Blue | 89 | 90 | 250 | Yes |
| Comparative Example 4 | 0 | Bentonite | 100 | 1 | - | - | - | 104 | - | Methylene Blue | 99 | 100 | 400 | No |
| Comparative Example 5 | 100 | Bentonite | 150 | 1 | Good | 38 | 1100 | 9 | 440 | Methylene Blue | 85 | 79 | 4 | No |
| Comparative Example 6 | 100 | Bentonite | 150 | 1 | Poor | - | 3 | - | - | - | - | - | - | - |

EP 3 862 470 B1

12

The following is found from Table 1. The PVA-based fibers of Examples 1 to 6 contain 30 to 500 parts by mass of the adsorbent with respect to 100 parts by mass of PVA, and have a crystallinity of polyvinyl alcohol ranging from 30% to 60%, a diameter ranging from 5 $\mu$m to 1000 $\mu$m, and a specific surface area ranging from 10 m$^2$/g to 2000 m$^2$/g. The fibers have thus excellent adsorption and handleability.

On the other hand, the following is found. The PVA-based fibers in Comparative Example 1 contain less than 30 parts by mass of bentonite. PVA covers bentonite at a high rate and thus decreases the permeability of the treatment liquid. The adsorption of methylene blue contained in the treatment liquid deteriorates.

It is found that, in Comparative Example 3, since the crystallinity degree of polyvinyl alcohol is less than 30%, the bentonite in the fibers falls off, resulting in high turbidity and poor handleability.

It is found that, in Comparative Example 4, since only bentonite and no PVA was used, bentonite was mixed into the treatment liquid, resulting in high turbidity and poor handleability.

In Comparative Example 5, the fibers have a larger diameter. The obtained fibers have difficulty in being crimped and were unable to be non-woven fabric.

As described above, the present invention is suitable for polyvinyl alcohol-based fibers containing an adsorbent. In addition, a fiber structure at least partially containing the polyvinyl alcohol-based fibers according to the present invention is advantageous in any of food and beverage, clothing, medical, agricultural, water treatment, and other applications.

**Claims**

1. A polyvinyl alcohol-based fiber comprising:

   a polyvinyl alcohol-based polymer; and
   an adsorbent,
   30 to 500 parts by mass of the adsorbent being contained with respect to 100 parts by mass of the polyvinyl alcohol-based polymer,
   the polyvinyl alcohol-based fiber having a crystallinity of polyvinyl alcohol ranging from 30% to 60%,
   the polyvinyl alcohol-based fiber having a diameter ranging from 5 $\mu$m to 1000 $\mu$m, and a specific surface area ranging from 10 m$^2$/g to 2000 m$^2$/g,
   the saponification rate of the polyvinyl alcohol-based polymer is 98 mol% or more,
   the average polymerization degree of the polyvinyl alcohol-based polymer obtained from the viscosity of an aqueous solution at 30 °C under the provisions of JIS K-6726 (1994) is from 1500 to 20000,
   wherein the crystallinity of polyvinyl alcohol is measured as the melting enthalpy of the fibers using a differential scanning calorimeter as described in the description, and
   wherein the specific surface area is evaluated using a specific surface area measurement apparatus by dynamic flow, single-point BET as described in the description.

2. The polyvinyl alcohol-based fiber of claim 1, wherein
   the effective utilization rate of the adsorbent, calculated using a spectrophotometer as described in the description, ranges from 50% to 100%.

3. The polyvinyl alcohol-based fiber of claim 1 or 2, wherein
   the fiber swelling degree, determined as described in the description, ranges from 150% to 600%.

4. The polyvinyl alcohol-based fiber of any one of claims 1 to 3, wherein
   the adsorbent is made of at least one selected from the group consisting of a layered silicate, a porous carbon material, and an aluminosilicate.

5. The polyvinyl alcohol-based fiber of any one of claims 1 to 4, wherein

   the adsorbent has an average particle size ranging from 0.1 $\mu$m to 100 $\mu$m, and wherein
   the average particle size is a 50% particle size (D50) which can be measured using a particle size distribution measurement apparatus employing laser Doppler flowmetry.

6. A fiber structure at least partially comprising
   the polyvinyl alcohol-based fiber of any one of claims 1 to 5.

7. The fiber structure of claim 6, wherein
the fiber structure is an adsorbent that adsorbs an adsorbate contained in a target object.

**Patentansprüche**

1. Faser auf Polyvinylalkohol-Basis, umfassend:

   ein Polymer auf Polyvinylalkohol-Basis; und
   ein Adsorptionsmittel,
   wobei 30 bis 500 Massenteile des Adsorptionsmittels mit Bezug auf 100 Massenteile des Polymers auf Polyvinylalkohol-Basis enthalten sind,
   die Faser auf Polyvinylalkohol-Basis eine Kristallinität des Polyvinylalkohols im Bereich von 30% bis 60% aufweist,
   die Faser auf Polyvinylalkohol-Basis einen Durchmesser im Bereich von 5 $\mu$m bis 1000 $\mu$m und eine spezifische Oberfläche im Bereich von 10 m$^2$/g bis 2000 m$^2$/g aufweist,
   die Verseifungsrate des Polymers auf Polyvinylalkohol-Basis 98 Mol-% oder mehr beträgt,
   der durchschnittliche Polymerisationsgrad des Polymers auf Polyvinylalkohol-Basis, der aus der Viskosität einer wässrigen Lösung bei 30°C gemäß den Bestimmungen von JIS K-6726 (1994) erhalten wird, von 1500 bis 20000 beträgt, wobei die Kristallinität des Polyvinylalkohols als die Schmelzenthalpie der Fasern unter Verwendung eines Differenzialrasterkalorimeters, wie in der Beschreibung beschrieben, gemessen wird, und
   wobei die spezifische Oberfläche unter Verwendung einer Vorrichtung zur Messung der spezifischen Oberfläche durch dynamische Strömung als Ein-Punkt-BET, wie in der Beschreibung beschrieben, bewertet wird.

2. Faser auf Polyvinylalkohol-Basis nach Anspruch 1, wobei die effektive Nutzungsrate des Adsorptionsmittels, berechnet unter Verwendung eines Spektrophotometers, wie in der Beschreibung beschrieben, im Bereich von 50 % bis 100 % liegt.

3. Faser auf Polyvinylalkohol-Basis nach Anspruch 1 oder 2, wobei der Faserquellungsgrad, bestimmt wie in der Beschreibung beschrieben, im Bereich

4. Faser auf Polyvinylalkohol-Basis nach einem der Ansprüche 1 bis 3, wobei das Adsorptionsmittel aus mindestens Einem, ausgewählt aus der Gruppe, bestehend aus einem Schichtsilikat, einem porösen Kohlenstoffmaterial und einem Aluminosilikat, hergestellt ist.

5. Faser auf Polyvinylalkohol-Basis nach einem der Ansprüche 1 bis 4, wobei das Adsorptionsmittel eine durchschnittliche Teilchengröße im Bereich von 0,1 $\mu$m bis 100 $\mu$m aufweist, und wobei
   die durchschnittliche Teilchengröße eine 50%-ige Teilchengröße (D50) ist, welche mit einer Vorrichtung zur Messung der Teilchengrößenverteilung, benutzend Laser-Doppler-Durchflussmessung, gemessen werden kann.

6. Faserstruktur, mindestens teilweise umfassend die Faser auf Polyvinylalkohol-Basis nach einem der Ansprüche 1 bis 5.

7. Faserstruktur nach Anspruch 6, wobei die Faserstruktur ein Adsorptionsmittel ist, das ein in einem Zielobjekt enthaltenes Adsorbat adsorbiert.

**Revendications**

1. Fibre à base d'alcool de polyvinyle comprenant :

   un polymère à base d'alcool de polyvinyle; et
   un adsorbant,
   30 à 500 parties en masse de l'adsorbant étant contenues sur base de 100 parties en masse du polymère à base d'alcool de polyvinyle,
   la fibre à base d'alcool de polyvinyle présentant une cristallinité de l'alcool de polyvinyle allant de 30% à 60%,
   la fibre à base d'alcool de polyvinyle présentant un diamètre allant de 5 $\mu$m à 1000 $\mu$m, et une surface spécifique allant de 10 m$^2$/g à 2000 m$^2$/g,

le taux de saponification du polymère à base d'alcool de polyvinyle est de 98% en mole ou plus,
le degré moyen de polymérisation du polymère à base d'alcool de polyvinyle obtenu de la viscosité d'une solution aqueuse à 30°C conformément à la norme JIS K-6726 (1994) va de 1500 à 20000,
dans laquelle la cristallinité de l'alcool de polyvinyle est mesurée en tant qu'enthalpie de fusion des fibres en utilisant un calorimètre différentielle à balayage comme stipulé dans la description, et
dans laquelle la surface spécifique est évaluée en utilisant un appareil de mesure de la surface spécifique par flux dynamique, BET un seul point, comme stipulé dans la description.

2. Fibre à base d'alcool de polyvinyle selon la revendication 1, dans laquelle le taux d'utilisation effectif de l'adsorbant, calculé en utilisant un spectrophotomètre comme stipulé dans la description, va de 50% à 100%.

3. Fibre à base d'alcool de polyvinyle selon la revendication 1 ou 2, dans laquelle le degré de gonflement de la fibre, déterminé comme stipulé dans la description, va de 150% à 600%.

4. Fibre à base d'alcool de polyvinyle selon l'une quelconque des revendications 1 à 3, dans laquelle l'adsorbant est constitué d'au moins l'un sélectionné parmi le groupe consistant en un silicate en couches, une matière de carbone poreux et un aluminosilicate.

5. Fibre à base d'alcool de polyvinyle selon l'une quelconque des revendications 1 à 4, dans laquelle

l'adsorbant présente une taille particulaire moyenne allant de 0,1 $\mu$m à 100 $\mu$m, et dans laquelle
la taille particulaire moyenne est une taille particulaire 50% (D50) qui peut être mesurée en utilisant un appareil de mesure de la distribution des tailles particulaires utilisant une débitmétrie Doppler laser.

6. Structure de fibre, comprenant au moins partiellement la fibre à base d'alcool de polyvinyle selon l'une quelconque des revendications 1 à 5.

7. Structure de fibre selon la revendication 6, dans laquelle la structure de fibre est un adsorbant qui adsorbe un adsorbat contenu dans un objet cible.

FIG.1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006297382 A
- JP S4742059 B
- JP H09320564 A
- JP 2005009029 A